(19) Europäisches Patentamt
European Patent Office
Office européen des brevets

(11) **EP 2 018 946 B1**

(12) **EUROPÄISCHE PATENTSCHRIFT**

(45) Veröffentlichungstag und Bekanntmachung des Hinweises auf die Patenterteilung:
**11.01.2017** Patentblatt **2017/02**

(51) Int Cl.:
*B29C 47/00* (2006.01)     *B29B 7/42* (2006.01)
*B29C 47/44* (2006.01)     *B29C 47/64* (2006.01)

(21) Anmeldenummer: **08405125.9**

(22) Anmeldetag: **02.05.2008**

(54) **Misch- und Knetmaschine für kontinuierliche Aufbereitungsprozesse sowie Verfahren zur Durchführung von kontinierlichen Aufbereitungsprozessen mittels einer Misch- und Knetmaschine**

Mixing and kneading machine for continuous preparation processes and method for carrying out continuous preparation processes with a mixing and kneading machine

Machine de mélange et de malaxage pour processus de préparation continue et procédé d'exécution de processus de préparation continue à l'aide d'une machine de mélange et de malaxage

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **25.07.2007 CH 11852007**

(43) Veröffentlichungstag der Anmeldung:
**28.01.2009** Patentblatt **2009/05**

(73) Patentinhaber: **Buss AG**
**4133 Pratteln (CH)**

(72) Erfinder:
• **Grüter, Heini**
**4132 Muttenz (CH)**
• **Siegenthaler, Hans-Ulrich**
**5034 Suhr (CH)**

(74) Vertreter: **EGLI-EUROPEAN PATENT ATTORNEYS**
**Horneggstrasse 4**
**Postfach**
**8034 Zürich (CH)**

(56) Entgegenhaltungen:
**EP-A- 1 262 303     JP-A- H09 254 230**
**US-A- 3 458 894**

**Beschreibung**

Die Erfindung betrifft eine Misch- und Knetmaschine für kontinuierliche Aufbereitungsprozesse, mit einer in einem Gehäuse rotierenden und sich gleichzeitig translatorisch bewegenden Schneckenwelle. Die Erfindung betrifft im weiteren ein Verfahren zur Durchführung von kontinuierlichen Aufbereitungsprozessen mittels einer gemäss dem Anspruch 1 ausgebildeten Misch- und Knetmaschine.

Misch- und Knetmaschinen der hier zur Rede stehenden Art werden insbesondere zum Aufbereiten von schüttgutartigen (Pulver, Granulate, Flakes, etc.), plastischen und/oder pastösen Massen eingesetzt. Beispielsweise dienen sie dem Verarbeiten von zähplastischen Massen, dem Homogenisieren und Plastifizieren von Kunststoffen, dem Einarbeiten von Füll- und Verstärkungsstoffen wie auch dem Herstellen von Ausgangsmaterialien für die Lebensmittel-, Chemie-/ Pharma und Aluminiumindustrie. Dabei sind oft auch kontinuierliche Entgasungs-, Misch- und Expansionsvorgänge integriert. In einigen Fällen werden die Misch- und Knetmaschinen auch als Reaktoren eingesetzt.

Das Arbeitsorgan der Misch- und Knetmaschine ist üblicherweise als sogenannte Schneckenwelle ausgebildet, welche das zu verarbeitende Material in axialer Richtung vorwärts transportiert.

Bei herkömmlichen Misch- und Knetmaschinen führt das Arbeitsorgan lediglich eine rotative Bewegung aus. Daneben sind jedoch auch Misch- und Knetmaschinen bekannt, bei denen das Arbeitsorgan rotiert und sich gleichzeitig translatorisch bewegt, eine derartiges Misch- und Knetmaschine ist durch US 3 458 894 A offenbar.

Der Bewegungsablauf des Arbeitsorgans zeichnet sich dabei insbesondere dadurch aus, dass die Hauptwelle eine der Rotation überlagerte Sinusbewegung ausführt. Dieser Bewegungsablauf ermöglicht das gehäuseseitige Anbringen von Einbauten, so genannte Knetbolzen oder Knetzähne. Der gewundene Schneckenflügel der Schneckenwelle ist dazu unterbrochen, so dass einzelne Knet- bzw. Schneckenflügel gebildet werden. Die auf der Hauptwelle angeordneten Schneckenflügel und die gehäuseseitigen Einbauten greifen ineinander und erzeugen damit die gewünschten Scher-/ Misch- und Knetfunktionen in unterschiedlichen Verfahrenszonen. Derartige Misch- und Knetmaschinen der letztgenannten Art sind Fachleuten insbesondere unter dem Begriff Buss Ko-Kneter® bekannt.

Es sind Misch- und Knetmaschinen der eingangs genannten Art bekannt, bei denen der Schneckenwellendurchmesser bis zu 700 mm beträgt. Der jeweilige Materialdurchsatz hängt dabei insbesondere vom Schneckenwellendurchmesser ab, wobei das Verhältnis Schneckenwellenaussendurchmesser (Da) zu Schneckenwelleninnendurchmesser (Di) Da/Di üblicherweise bei ca. 1.5 liegt, während das Verhältnis Schneckenwellenaussendurchmesser (Da) zu Hub (translatorischer Bewegungsanteil) (H) Da/H= ca. 6.7 beträgt und das Verhältnis Teilung (axialer Abstand der Schneckenflügel) (T) zu Hub (H) T/H im Bereich von 2 liegt. Je nach Grösse der Misch-und Knetmaschine werden Drehzahlen von 5 bis 500 1/min gefahren.

Die Auslegung der Misch- und Knetmaschinen erfolgt üblicherweise nach dem Prinzip der geometrischen Ähnlichkeit. Geometrische Ähnlichkeit besteht, wenn die Verhältnisse Da/Di, Da/H und T/H unabhängig von der Grösse konstant sind.

Massgebliche Faktoren für die Dispergier-, Misch- und Homogenisierungsgüte des verarbeiteten Produktes sind die Schmelzetemperatur, die Verweilzeit des Produkts im Prozessraum der Maschine, die Schergeschwindigkeit und die Anzahl der Scherzyklen im schmelzegefüllten Schneckenkanal -Prozessraum-.

Für viele Prozesse gilt, dass die Misch-, Dispergier- und Homogenisierungsgüte umso höher ausfällt, je besser die hintereinander angeordneten Verfahrenszonen wie Einzugs-, Aufschmelz-, Misch- und Dispergier- und Entgasungszone bezüglich Förderkapazität, Schergeschwindigkeitsniveau und Füllgrad aufeinander abgestimmt sind. Beim heutigen Stand der Misch- und Knettechnik sind bei Standardaufbereitungsprozessen mittlere Schergeschwindigkeiten im Schmelzebereich von 15 bis 150 1/s und mittlere Produktverweilzeiten im gesamten Schneckenbereich von 30 bis 600 s üblich.

Bei herkömmlichen Misch- und Knetmaschinen werden die mittleren Schergeschwindigkeiten durch die Schneckendrehzahl und durch das Verhältnis Da/Di nach oben begrenzt. Bei steigenden Schergeschwindigkeiten ergeben sich aber auch höhere spezifische Werte der Energieeinleitung, was zu inakzeptabel hohen Schmelzetemperaturen führen kann. Zusammen mit grossen mittleren Verweilzeiten des Produktes in der Misch- und Knetmaschine kann dies zu qualitätsmindernden Produktschädigungen führen, und zwar hinsichtlich des thermischen Abbaus oder/und der Vernetzung.

Der Erfindung liegt die Aufgabe zugrunde, die im Oberbegriff des Anspruchs 1 definierte Misch- und Knetmaschine derart weiterzubilden, dass deren Wirkungsgrad in Bezug auf Materialdurchsatz pro Zeiteinheit gesteigert werden kann, ohne dass die Qualität des verarbeiteten Produkts nennenswert herabgesetzt wird.

Diese Aufgabe wird mit einer Misch- und Knetmaschine gelöst, welche die im Kennzeichen des Anspruchs 1 angegebenen Merkmale aufweist.

Indem die Geometrie der Misch- und Knetmaschine so gewählt wird, dass das Verhältnis Schneckenwellenaussendurchmesser Da zu Schneckenwelleninnendurchmesser Di zwischen 1.5 und 2.0 liegt, das Verhältnis Da/H zwischen Schneckenwellenaussendurchmesser Da zu Hub H zwischen 4 und 6 liegt, und das Verhältnis T/H zwischen Teilung T zu Hub H zwischen 1.3 und 2.5 liegt, wird die grundsätzliche Voraussetzung für einen optimierten Wirkungsgrad der Maschine in Bezug auf den maximalen Produkt-Durchsatz erreicht. Eine mit der definierten Geometrie ausgebildete Misch- und Knetmaschine eignet sich in besonders bevorzugter Weise, um mit Drehzahlen von über 500 1/min betrieben zu werden. Es versteht sich, dass mit der Erhöhung der Drehzahl grundsätzlich auch der Produkt-Durchsatz gesteigert werden kann.

Durch die definierte Geometrie wird zudem sichergestellt, dass die in axialer Richtung hintereinander angeordneten Verfahrenszonen, insbesondere die Einzugszone, die Aufschmelzzone, die Mischzone bzw. die Mischzonen wie auch die Entgasungszone bezüglich Förderkapazität, Schergeschwindigkeitsniveau und Füllgrad optimal aufeinander abgestimmt werden können, so dass qualitätserhöhende mittlere Schergeschwindigkeitsbereiche bei gleichzeitiger Verkürzung der Einwirkdauer von Temperaturspitzen im Produkt realisiert werden können.

Mit den erfindungsgemäss gewählten Geometrieformen kann die Misch- und Knetmaschine ohne weiteres mit hohen Schneckendrehzahlen betrieben werden, wodurch sich ein hoher Produktdurchsatz pro Zeiteinheit erzielen lässt, ohne dass sich eine unzulässig hohe spezifische Energieeinleitung ergibt.

Bevorzugte Weiterbildungen der Misch- und Knetmaschine sind in den abhängigen Ansprüchen 2 bis 8 angegeben.

Eine weitere Aufgabe der Erfindung besteht darin, ein Verfahren zur Durchführung von kontinuierlichen Aufbereitungsprozessen mittels einer gemäss dem Anspruch 1 ausgebildeten Misch- und Knetmaschine vorzuschlagen, mittels welchem der Materialdurchsatz pro Zeiteinheit gesteigert werden kann.

Zur Lösung dieser Aufgabe wird gemäss dem Kennzeichen des Anspruchs 9 vorgeschlagen, die Schneckenwelle mit einer Drehzahl grösser 500 1/min, insbesondere grösser 800 1/min zu betreiben.

Durch das Erhöhen der Schneckenwellendrehzahl ist es zudem möglich, die mittlere Verweilzeit des Produkts in der Maschine extrem zu verkürzen, wie dies im Anspruch 10 definiert ist.

Die sich aus den hohen Schneckendrehzahlen und den hohen Produktdurchsätzen ergebenden niedrigen Produktverweilzeiten von 1 bis 20 sec vermindern gleichzeitig die Neigung zum thermischen Abbau oder zur Vernetzung der Produkte.

Durch die erfindungsgemässe Ausgestaltung der Misch- und werden weitere Anwendungsbereiche erschlossen.

Nachfolgend wird die Erfindung mittels Zeichnungen näher erläutert. Es zeigt:

Fig. 1 einen Längsschnitt durch eine schematisch dargestellte Misch- und Knetmaschine;

Fig. 2 den geometrischen Aufbau eines Abschnitts einer erfindungsgemäss gestalteten Schneckenwelle,

Fig. 3 die Relativbewegung zwischen einem Knetbolzen und einem konventionellen Schneckenflügel in schematischer Darstellung;

Fig. 4 den Durchsatz über der mittleren Verweilzeit in der Misch- und Knetmaschine

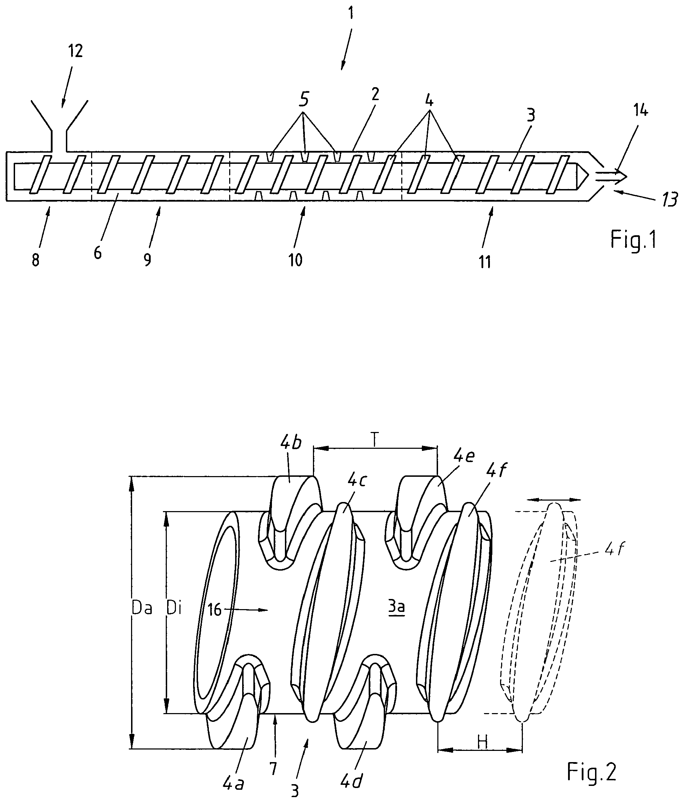

Fig. 1 zeigt einen Längsschnitt durch eine schematisch dargestellte Misch- und Knetmaschine 1. Die Misch- und Knetmaschine 1 weist ein von einem Gehäuse 2 umschlossenes Arbeitsorgan in Form einer Schneckenwelle 3 auf, welche mit einer Vielzahl von spiralförmig verlaufenden Schneckenflügeln 4 versehen ist. Eine derartige Misch- und Knetmaschine 1 wird auch als Einschneckenextruder bezeichnet, da die Maschine nur eine Schneckenwelle aufweist. Die Schneckenflügel 4 der Schneckenwelle 3 sind in Umfangsrichtung unterbrochen, um axiale Durchtrittsöffnungen für am Gehäuse 2 angeordnete Knetbolzen 5 zu schaffen. Dadurch kann die Schneckenwelle 3 neben der eigentlichen Rotation auch eine axiale, d.h. eine translatorische Bewegung ausführen. Zwischen der Innenseite des Gehäuses 2 und der Schneckenwelle 3 wird der eigentliche Prozessraum 6 gebildet, der üblicherweise mehrere axial hintereinander angeordnete Verfahrenszonen 8-11 umfasst. Im vorliegenden Beispiel weist die Misch- und Knetmaschine 1 beispielhaft eine Einzugszone 8, eine Aufschmelzzone 9, eine Misch- und Dispergierzone 10 sowie eine Entgasungszone 11 auf. Einlassseitig ist die Misch- und Knetmaschine 1 mit einem Fülltrichter 12 versehen, während auslassseitig eine Austrittsöffnung 13 vorgesehen ist, über welche das aufbereitete Material in Pfeilrichtung 14 austreten kann. Der grundsätzliche Aufbau einer derartigen Misch- und Knetmaschine ist beispielsweise aus der CH 278,575 bekannt. Obwohl im gezeigten Beispiel nur im Bereich der Misch- und Dispergierzone 10 Knetbolzen 5 eingezeichnet sind, können Knetbolzen 5, je nach Bedarf, natürlich auch in anderen Zonen angeordnet werden.

Die Fig. 2 zeigt den geometrischen Aufbau eines Abschnitts -Moduls- einer erfindungsgemäss gestalteten Schneckenwelle 3 in perspektivischer Ansicht, wobei die Wellengeometrie bei dem hier dargestellten Schneckenwellenmodul 3a nicht massstabsgetreu wiedergegeben ist. Die Schneckenwelle 3 ist für den Einsatz in einer Misch- und Knetmaschine 1 vorgesehen, welche in der Form eines sogenannten Einschneckenextruders ausgebildet ist, wobei die Schneckenwelle 3 als rotierendes und sich gleichzeitig translatorisch bewegendes Arbeitsorgan ausgebildet ist, wie dies bei dem eingangs erwähnten Buss Ko-Kneter® der Fall ist. Das Schneckenwellenmodul 3a ist mit insgesamt acht Schneckenflügeln versehen, wovon deren sechs 4a-4f ersichtlich sind. Zwischen zwei in Umfangsrichtung aufeinander folgenden Schneckenflügeln 4a, 4b bleibt jeweils eine Durchtrittsöffnung 16 frei, in welche sich ein am Gehäuse angeordneter Knetbolzen (nicht dargestellt) erstrecken kann. Der Innendurchmesser der Schneckenwelle 3 ist mit Di bezeichnet, während der Aussendurchmesser der Schneckenwelle 3 mit Da bezeichnet ist. Der Innendurchmesser Di wird durch die äussere, zylindrische Mantelfläche 7 der Schneckenwelle 3 bestimmt, während der Aussendurchmesser Da durch den diametralen Abstand zwischen den höchsten bzw. äussersten Bereichen von einander diametral gegenüberliegenden, in axialer Richtung jedoch versetzten Knetflügeln 4a, 4b bestimmt wird. Die Teilung, d.h. der mittlere Abstand zwischen zwei in axialer Richtung aufeinander folgenden Schneckenflügeln 4b, 4e ist mit T bezeichnet, wobei die die Teilung T bestimmenden Schneckenflügel ggf. auch radial zueinander versetzt sein können. Der Hub, d.h. der Weg, den die Schneckenwelle 3 in axialer Richtung zurücklegt, ist mit H bezeichnet.

Im vorliegenden Beispiel sind die seitlichen Hauptflächen der Schneckenflügel 4a-4f als Freiformflächen ausgebildet. Vorzugsweise sind auch die Hauptflächen der Knetbolzen (nicht dargestellt) als Freiformflächen ausgebildet. Eine Freiformfläche ist eine Fläche, deren dreidimensionale Geometrie in keinem Punkt einen natürlichen Anfangspunkt besitzt. Indem die Hauptflächen der Schneckenflügel 4a-4f und/oder der Knetbolzen zumindest teilweise als Freiformflächen ausgebildet sind, ergeben sich völlig neue Beeinflussungsmöglichkeiten bezüglich der statischen wie auch der dynamischen Schneckenwellengeometrie, beispielsweise in Bezug auf den zwischen einem Schneckenflügel und dem zugehörigen Knetbolzen verbleibenden Spalt. Insbesondere kann die Grösse und der Verlauf dieses Spalts praktisch beliebig verändert werden, wobei gleichzeitig auch auf die der Drehbewegung überlagerte Axialbewegung der Schneckenwelle Rücksicht genommen werden kann. Dadurch kann letztlich ein optimierter mechanischer Energieeintrag und/oder eine Veränderung der im Prozessraum erzeugten und auf das zu verarbeitende Produkt einwirkenden Scher- und Dehnströmungsfelder erreicht werden.

Die Verhältnisse bei der erfindungsgemäss ausgebildeten Schneckenwelle 3 stellen sich wie folgt dar:

- Da/Di = 1.5 bis 2.0, d.h. das Verhältnis zwischen Schneckenwellenaussendurchmesser Da und Schneckenwelleninnendurchmesser Di liegt zwischen 1.5 und 2.0;

- Da/H = 4 bis 6, d.h. das Verhältnis zwischen Schneckenwellenaussendurchmesser Da und Hub H liegt zwischen 4 und 6 ;

- T/H = 1.3 bis 2.5, d.h. das Verhältnis zwischen Teilung T und Hub H liegt zwischen 1.3 und 2.5.

Versuche mit erfindungsgemäss ausgebildeten Schneckenwellen wurden auf Buss Ko-Knetern (rotierenden und sich gleichzeitig translatorisch bewegenden Einschneckenextrudern) durchgeführt, wobei der grundsätzliche Aufbau der Maschine (Anordnung der Verfahrenszonen) so belassen wurde, wie diese bisher für den jeweiligen Kunststoffaufbereitungsprozess mit üblichen Drehzahlen von 100 bis 500 1/min Verwendung fand.

Bei den Versuchen wurden Schneckendrehzahlen von weit über 500 1/min gefahren und dabei überraschenderweise festgestellt, dass in Verfahrenszonen, in denen die Förderkapazität, das Schergeschwindigkeitsniveau und der Füllgrad aufeinander abgestimmt sind, keine wesentliche Erhöhung der Massetemperatur, d.h. Temperatur des in der Maschine verarbeiteten Produkts, eintritt.

Im Betrieb wird eine derartige Schneckenwelle daher vorzugsweise mit Drehzahlen grösser 500 1/min betrieben werden, wobei auch Drehzahlen grösser 800 1/min bis hin zu Drehzahlen im Bereich von 2000 1/min realisierbar sind, ohne dass das aufzubereitende Produkt Schaden nehmen würde.

Vorzugsweise ist die Steigung der Schneckenflügel 4a-4f derart auf die Länge des Prozessraums 6 (Fig. 1) abgestimmt, dass die Verweilzeit des Produkts in der Maschine maximal 20 Sekunden beträgt, wenn die Schneckenwelle 3 mit Drehzahlen über 500 1/min betrieben wird.

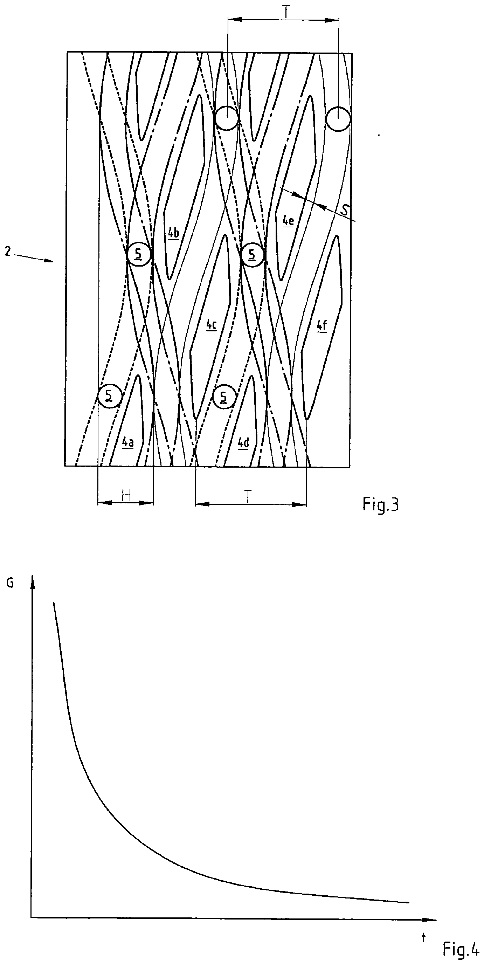

Aus der Fig. 3 ist in vereinfachter Darstellung der Bewegungsablauf der sich translatorisch bewegenden Schneckenwelle ersichtlich, wobei die Innenseite des Gehäuses bzw. die Mantelfläche des Arbeitsraums in der Abwicklung dargestellt ist und nur einzelne Schneckenflügel 4a, 4b, 4c eingezeichnet sind. Die Knetbolzen 5 sind der Einfachheit halber als runde Elemente dargestellt. Anhand dieser Figur ist die Relativbewegung zwischen dem jeweiligen Schneckenflügel 4a, 4b, 4c und den angrenzenden Knetbolzen 5 ersichtlich. Der besseren Übersichtlichkeit wegen ist der Bewegungsablauf jedoch in kinematischer Umkehr eingezeichnet, d.h. die Schneckenflügel 4a, 4b, 4c werden als stillstehend angenommen, während sich die Knetbolzen 5 auf einer sinusförmigen Bahn bewegen, welche durch die Drehbewegung der Schneckenwelle und die überlagerte translatorische Bewegung zu Stande kommt. Wie aus dieser Darstellung ersichtlich ist, verbleibt zwischen den beiden seitlichen Hauptflächen eines Schneckenflügels 4c und den daran vorbeistreichenden Knetbolzen 5 ein spaltförmiger Freiraum S, dessen Breite und Verlauf durch die Geometrie des Schneckenflügels 4c, der zugehörigen Knetbolzen 5 sowie die axiale Verlagerung des sich drehenden Arbeitsorgans bestimmt wird. Die Teilung T ist ebenfalls eingezeichnet. Sie entspricht dem Abstand zwischen zwei in axialer Richtung benachbarten Knetbolzen 5 bzw. Schneckenflügeln 4c, 4f. Der Hub H der Schneckenwelle ist ebenfalls eingetragen.

In Fig. 4 ist die Abhängigkeit zwischen Durchsatz G (kg/h) und Verweilzeit t (Sekunden) eines in der Misch- und Knetmaschine zu verarbeitenden Produkts dargestellt. Anhand dieses Diagramms ist erkennbar, dass mit Zunahme des Durchsatzes die Zeit, während der das Produkt hohen Temperaturen ausgesetzt sein kann, deutlich reduziert wird.

Durchgeführte Versuche haben gezeigt, dass auch eine Massetemperatur, die nach bisherigen Erfahrungen zu einer Qualitätsminderung des Produktes führen musste, bei genügend kurzer Einwirkdauer qualitätsunschädlich ist. Genügend kurze Verweilzeiten lassen sich jedoch nur durch erhöhte Durchsätze erzielen.

Der Durchsatz und die Qualität des compoundierten Produktes hängen dabei von der eingesetzten Schneckengeometrie, der Drehzahl und der Fördercharakteristik der einzelnen Verfahrenszonen der Maschine ab.

Jede Compoundierung hat zum Ziel, ein homogenes Endprodukt - in der Regel unter Einarbeitung von Zuschlagstoffen - zu erzielen. Die Zuschlagstoffe und vorhandene Inhomogenitäten müssen daher in der Maschine dispergiert und distributiv eingemischt werden. Zum Zerteilen von Partikeln sind mehr oder weniger grosse Schubspannungen erforderlich, die über die umgebende Matrix auf die Partikel übertragen werden müssen. Die Schubspannung tau ergibt sich nach der Gleichung

$$\tau = \eta * \dot{\gamma} \quad (1)$$

aus der Viskosität $\eta$ des Matrixmediums und der dort aufgezwungenen Schergeschwindigkeit $\dot{\gamma}$. Ein massgeblicher Faktor für die Dispergier-, Misch- und Homogenisierungsgüte des verarbeiteten Produkts ist daher neben der Schmelzetemperatur und der Verweilzeit die Schergeschwindigkeit $\dot{\gamma}$ [1/sec] im schmelzegefüllten Schneckenkanal.

Betrachtet man diese vereinfacht als mittleren Wert aus dem Quotienten Schneckenumfangsgeschwindigkeit/Scherspalt, so gilt (100% Füllgrad im Schneckenkanal vorausgesetzt):

$$\dot{\gamma} = \frac{v_u}{s} = \frac{D_a * \pi * n_s}{s} \quad (2)$$

Für viele Prozesse gilt:

Ein ausgewogenes Schergeschwindigkeitniveau ergibt eine optimale Misch-, Dispergier- und Homogenisierungsgüte. Beim heutigen Stand der Misch- und Knettechnik sind bei Standardaufbereitungsprozessen mittlere Schergeschwindigkeiten im Schmelzebereich von 20 1/s bis 150 1/s und mittlere Produktverweilzeiten im gesamten Schneckenbereich von 30 bis 600 s üblich.

Bei herkömmlichen Misch- und Knetmaschinen werden die mittleren Schergeschwindigkeiten wie aus Gleichung (2) ersichtlich, durch die Schneckendrehzahl und durch Da/s nach oben begrenzt.

Bei steigenden Schergeschwindigkeiten ergeben sich durch die Beziehung

$$e_{spec} = 1\frac{1}{\rho_s} * \eta_{(\gamma)} * \gamma^2 * t \quad (3)$$

aber auch höhere Werte der spezifischen *Energieeinleitung* $e_{spec}$, was wiederum zu unaktzeptabel hohen Schmelzetemperaturen führen kann, da sich die Temperaturerhöhung der Schmelze aus der Gleichung

$$\Delta T = \frac{e_{spec}}{c_p} \quad (4)$$

($c_p$ = spezifische Wärmekapazität) berechnet. Zusammen mit grossen mittleren Verweilzeiten des Produktes im Misch- und Knetmaschine kann also eine zu hohe Schergeschwindigkeit auch zu qualitätsmindernden Produktschädigungen (thermischer Abbau oder Vernetzung) führen.

Bei der erfindungsgemässen Misch- und Knetvorrichtung kann die rotierende und sich gleichzeitig translatorisch bewegende Schneckenwelle mit Drehzahlen von 500 bis 2000 1/min betrieben werden, da durch die vorgeschlagene Anpassung der Verhältnisse Da/Di, Da/H und T/H qualitätserhöhende mittlere Schergeschwindigkeiten bei gleichzeitiger Verkürzung der Einwirkdauer von Temperaturspitzen im Produkt realisiert werden können.

Verwendete Formelzeichen:

| | |
|---|---|
| $e_{spec}$: | mittlere spezifische Energieeinleitung [kWh/kg] |
| $t$: | mittlere Verweilzeit des Produkts im Extruder [s] |
| $\rho$: | Schmelzedichte [kg/m^3] |
| $\gamma$: | mittlere Schergeschwindigkeit [1/sec] |
| $\eta$: | mittlere dynamische Viskosität [Pa*sec] |
| Da: | Schneckenwellenaussendurchmesser [mm] |
| Di: | Schneckenwelleninnendurchmesser [mm] |
| S: | mittlerer Scherspalt zwischen Schneckenflügel und Knetbolzen bzw. Knetzahn |
| ns: | Schneckendrehzahl [1/min] bzw. [1/s] |
| vu: | Umfangsgeschwindigkeit der Schneckenwelle [m/s] |
| $\tau$: | Schubspannung [N/mm^2] |
| cp: | spezifische Enthalpie [kJ/kg*K] |
| G: | Durchsatz [kg/h] |
| $\Delta T$: | Massetemperaturerhöhung [K] |

**Patentansprüche**

1. Misch- und Knetmaschine (1) für kontinuierliche Aufbereitungsprozesse, mit einer in einem Gehäuse (2) rotierenden und sich gleichzeitig in axialer Richtung translatorisch bewegenden Schneckenwelle (3), **dadurch gekennzeichnet, dass** das Verhältnis Da/Di von Schneckenwellenaussendurchmesser Da zu Schneckenwelleninnendurchmesser Di zwischen 1.5 und 2.0 liegt, dass das Verhältnis Da/H von Schneckenwellenaussendurchmesser Da zu Hub H zwischen 4 und 6 liegt, und dass das Verhältnis T/H von Teilung T zu Hub H zwischen 1.3 und 2.5 liegt.

2. Misch- und Knetmaschine (1) nach Anspruch 1, **dadurch gekennzeichnet, dass** die Schneckenwelle (3) mit einer Drehzahl grösser 500 1/min, insbesondere grösser 800 1/min betrieben wird.

3. Misch- und Knetmaschine (1) nach Anspruch 1, **dadurch gekennzeichnet, dass** die Misch- und Knetmaschine (1) mehrere in Förderrichtung aufeinanderfolgende, einen Prozessraum (6) bildende Zonen aufweist.

4. Misch- und Knetmaschine (1) nach Anspruch 3, **dadurch gekennzeichnet, dass** der Prozessraum (6) durch zumindest eine Einzugszone (8), eine Aufschmelzzone (9), eine Misch- und Dispergierzone (10) sowie eine Entgasungszone (11) gebildet ist.

5. Misch- und Knetmaschine (1) nach Anspruch 3 oder 4, **dadurch gekennzeichnet, dass** die Drehzahl der Schneckenwelle (3) derart auf die Länge des Prozessraums (6) abgestimmt ist, dass die Produktverweilzeit in der Maschine zwischen 1 und 20 Sekunden liegt.

6. Misch- und Knetmaschine (1) nach Anspruch 3 oder 4, **dadurch gekennzeichnet, dass** die Steigung der Schneckenflügel (4) derart auf die Länge des Prozessraums (6) abgestimmt ist, dass die Verweilzeit des Produkts in der Maschine bei Drehzahlen der Schneckenwelle (3) über 500 1/min maximal 20 Sekunden beträgt.

7. Misch- und Knetmaschine (1) nach einem der vorhergehenden Ansprüche, wobei die Misch- und Knetmaschine (1) mit am Gehäuse (2) befestigten Knetbolzen (5) versehen ist, welche in den Prozessraum (6) hineinragen, **dadurch gekennzeichnet, dass** die Hauptflächen der Schneckenflügel (4) und/oder der Knetbolzen (5) zumindest teilweise als Freiformflächen ausgebildet sind.

8. Misch- und Knetmaschine (1) nach Anspruch 7, **dadurch gekennzeichnet, dass** die dreidimensionale Geometrie der Hauptflächen der Schneckenflügel (4) und/oder der Knetbolzen (5) zumindest teilweise derart ausgebildet ist/sind, dass sie in keinem Punkt einen natürlichen Anfangspunkt besitzen.

9. Verfahren zur Durchführung von kontinuierlichen Aufbereitungsprozessen mittels einer gemäss dem Anspruch 1 ausgebildeten Misch- und Knetmaschine (1), **dadurch gekennzeichnet, dass** die Schneckenwelle mit einer Drehzahl grösser 500 1/min, insbesondere grösser 800 1/min betrieben wird.

10. Verfahren nach Anspruch 9, **dadurch gekennzeichnet, dass** die Drehzahl der Schneckenwelle derart gewählt wird, dass die mittlere Verweilzeit des in der Maschine (1) zu verarbeitenden Produkts zwischen 1 und 20 sec liegt.

11. Verfahren nach Anspruch 9 oder 10, **dadurch gekennzeichnet, dass** schüttgutartige, plastische und/oder pastösen Massen aufbereitet werden.

Claims

1. Mixing and kneading machine (1) for continuous processing, including a worm shaft (3) rotating in a housing (2) and simultaneously moving translationally in axial direction, **characterised in that** the ratio Da/Di of the worm shaft outer diameter Da to the worm shaft inner diameter Di is between 1.5 and 2.0, the ratio Da/H of the worm shaft outer diameter Da to hub H is between 4 and 6 and the ratio T/H of the partition T to the hub H is between 1.3 and 2.5.

2. Mixing and kneading machine (1) according to claim 1, **characterised in that** the worm shaft (3) is operated at a rotational speed exceeding 500 rpm, particularly exceeding 800 rpm.

3. Mixing and kneading machine (1) according to claim 1, **characterised in that** the mixing and kneading machine (1) comprises a plurality of zones that are sequential in conveying direction and form a processing chamber (6).

4. Mixing and kneading machine (1) according to claim 3, **characterised in that** the processing chamber (6) is formed by at least one feeding zone (8), a melting zone (9), a mixing and dispersing zone (10) as well as a venting zone (11).

5. Mixing and kneading machine (1) according to claim 3 or 4, **characterised in that** the rotational speed of the worm shaft (3) is adjusted to the length of the processing chamber (6) such that the dwelling time of the product in the machine is between 1 and 20 seconds.

6. Mixing and kneading machine (1) according to claim 3 or 4, **characterised in that** the pitch of the screw vanes (4) is adapted to the length of the processing chamber (6) such that the dwelling time of the product in the machine at rotational speeds of the worm shaft (3) exceeding 500 rpm is a maximum of 20 seconds.

7. Mixing and kneading machine (1) according to any one of the preceding claims, wherein the mixing and kneading machine (1) is provided with kneading pins (5) secured to the housing (2) which protrude into the processing space (6), **characterised in that** the main surfaces of the screw vanes (4) and/or the kneading pins (5) are designed at least partly as free-formed surfaces.

8. Mixing and kneading machine (1) according to claim 7, **characterised in that** the three-dimensional geometry of the main surfaces of the screw vanes (4) and/or of the kneading pins (5) is/are designed at least in part such that they do not have a natural starting point at any point.

9. Method for performing continuous processing by means of a mixing and kneading machine (1) configured according to claim 1, **characterised in that** the worm shaft is operated at a rotational speed exceeding 500 rpm, particularly exceeding 800 rpm.

10. Method according to claim 9, **characterised in that** the rotational speed of the worm shaft is selected such that the average dwelling time of the product to be processed in the machine (1) is between 1 and 20 seconds.

11. Method according to claim 9 or 10, **characterised in that** bulk-like material, plastic and/or paste-like masses are processed.

**Revendications**

1. Machine à mélanger et malaxer (1) pour des processus de préparation continus, avec une vis sans fin (3) qui tourne dans un tube (2) et qui se déplace simultanément en translation dans la direction axiale, **caractérisée en ce que** le rapport Da/Di du diamètre extérieur de vis sans fin Da au diamètre intérieur de vis sans fin Di est compris entre 1,5 et 2,0, **en ce que** le rapport Da/H du diamètre extérieur de vis sans fin Da à la course H est compris entre 4 et 6 et **en ce que** le rapport T/H du pas T à la course H est compris entre 1,3 et 2,5.

2. Machine à mélanger et malaxer (1) selon la revendication 1, **caractérisée en ce que** l'on fait fonctionner la vis sans fin (3) avec une vitesse de rotation supérieure à 500 tr/min, notamment supérieure à 800 tr/min.

3. Machine à mélanger et malaxer (1) selon la revendication 1, **caractérisée en ce que** la machine à mélanger et malaxer (1) comporte plusieurs zones qui se succèdent dans la direction de transport et qui forment un espace de processus (6).

4. Machine à mélanger et malaxer (1) selon la revendication 3, **caractérisée en ce que** l'espace de processus (6) est formé par au moins une zone d'entrée (8), une zone de fusion (9), une zone de mélange et de dispersion (10) ainsi qu'une zone de dégazage (11).

5. Machine à mélanger et malaxer (1) selon la revendication 3 ou 4, **caractérisée en ce que** la vitesse de rotation de la vis sans fin (3) est adaptée de telle sorte à la longueur de l'espace de processus (6) que le temps de séjour du produit dans la machine est compris entre 1 et 20 secondes.

6. Machine à mélanger et malaxer (1) selon la revendication 3 ou 4, **caractérisée en ce que** la pente de la pale de vis sans fin (4) est adaptée de telle sorte à la longueur de l'espace de processus (6) que le temps de séjour du produit dans la machine pour des vitesses de rotation de la vis sans fin (3) supérieures à 500 tr/min vaut 20 secondes au maximum.

7. Machine à mélanger et malaxer (1) selon l'une des revendications précédentes, la machine à mélanger et malaxer (1) étant munie de dents de malaxage (5) qui sont fixées au tube (2) et qui pénètrent dans l'espace de processus (6), **caractérisée en ce que** les surfaces principales de la pale de vis sans fin (4) et/ou des dents de malaxage (5) sont conçues au moins en partie comme des surfaces de forme libre.

8. Machine à mélanger et malaxer (1) selon la revendication 7, **caractérisée en ce que** la géométrie tridimensionnelle des surfaces principales de la pale de vis sans fin (4) et/ou des dents de malaxage (5) est conçue au moins en partie de telle sorte qu'elle n'a en aucun point un point d'origine naturel.

9. Procédé de mise en oeuvre de processus de préparation continus au moyen d'une machine à mélanger et malaxer (1) conçue selon la revendication 1, **caractérisé en ce que** l'on fait fonctionner la vis sans fin avec une vitesse de rotation supérieure à 500 tr/min, notamment supérieure à 800 tr/min.

10. Procédé selon la revendication 9, **caractérisé en ce que** la vitesse de rotation de la vis sans fin est choisie de telle sorte que le temps de séjour moyen du produit à traiter dans la machine (1) est compris entre 1 et 20 secondes.

11. Procédé selon la revendication 9 ou 10, **caractérisé en ce que** l'on prépare des masses de produits en vrac, plastiques et/ou pâteuses.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3458894 A
- CH 278575